# EUROPÄISCHE PATENTSCHRIFT

(11) **EP 3 530 552 B1**
(45) Veröffentlichungstag und Bekanntmachung des Hinweises auf die Patenterteilung: **28.07.2021**
(21) Anmeldenummer: 18211611.1
(22) Anmeldetag: 11.12.2018
(51) Int. Cl.: B62D 33/06, B60N 3/06, B60N 2/24, B60N 2/38

(54) **FAHRERKABINE**
DRIVER`S CABIN
CABINE DE CONDUCTEUR

(30) Priorität: 19.02.2018 DE 102018001267
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Hügemann, Jan, 59394 Nordkirchen (DE); Nübel, Thomas, 33428 Harsewinkel (DE); Weichert, Arne, 49324 Melle (DE)

(56) Entgegenhaltungen:
- DE-A1-102014 204 638
- US-A1- 2014 049 029

## Beschreibung

Die vorliegende Erfindung betrifft eine Fahrerkabine, insbesondere für eine landwirtschaftliche Arbeitsmaschine wie etwa einen Mähdrescher oder einen Feldhäcksler.

Derartige Arbeitsmaschinen tragen im Allgemeinen an ihrer Vorderseite ein Arbeitsgerät wie etwa einen Erntevorsatz, der von der Fahrerkabine aus genau zu beobachten sein muss. Um dem Fahrer eine möglichst uneingeschränkte Sicht zu bieten, kann die Fahrerkabine der Arbeitsmaschine eine Frontscheibe aufweisen, die sich ununterbrochen zwischen einem Dach und einer Bodenplatte der Fahrerkabine sowie horizontal über deren gesamte Breite erstreckt und eventuell auch auf die seitlichen Flanken der Fahrerkabine ausgreift.

Es ist an sich wünschenswert, in der Fahrerkabine einer landwirtschaftlichen Arbeitsmaschine Fußstützen vorzusehen, die es dem Fahrer ermöglichen, während der Arbeit seine Sitzhaltung zu wechseln. Aus EP 2 873 557 B1 ist eine Fahrerkabine für eine Baumaschine bekannt, bei der Fußstützen an zwei sich beiderseits einer Frontscheibe erstreckenden vertikalen Holmen montiert sind und in eine Stellung schwenkbar sind, in der sie sich von den Holmen aus horizontal vor der Frontscheibe erstrecken. Je breiter die Frontscheibe ist, umso länger müssen die Fußstützen sein, um den Fahrer nicht zu einer unnötig gespreizten Beinhaltung zu zwingen. Je länger die Fußstützen sind, umso stärker beeinträchtigen sie auch die Sicht. Würde man, um kürzere Fußstützen verwenden zu können, die Breite der Frontscheibe verringern, dann würden die Holme zur Mitte des Blickfelds des Fahrers rücken und so die Sicht aus der Fahrerkabine beeinträchtigen.

Aufgabe der Erfindung ist es, eine Fahrerkabine zu schaffen, die dem Fahrer bequeme wechselnde Sitzhaltungen ermöglicht und dabei Einschränkungen der Sicht weitestgehend vermeidet. US2014049029 zeigt eine Fahrerkabine für eine landwirtschaftliche Arbeitsmaschine, wobei an linker und rechter Seite einer Mittelsäule jeweils eine Fußstütze montiert ist.

Die Aufgabe wird gelöst, indem bei einer Fahrerkabine für eine landwirtschaftliche Arbeitsmaschine an linker und rechter Seite einer Mittelsäule jeweils eine Fußstütze montiert ist, die zwischen einer Warteposition und einer Nutzungsposition schwenkbar ist. In der Nutzungsposition kann zwar unter Umständen nicht völlig vermieden werden, dass die Fußstützen für den Fahrer sichtbar sind und die Sicht durch eine Frontscheibe einschränken, doch da sie sich seitwärts nicht weiter erstrecken müssen, als zum Platzieren der Füße erforderlich, beeinträchtigen sie insbesondere nicht die für ein sicheres Navigieren der Arbeitsmaschine erforderliche freie Sicht auf den linken und rechten Rand eines an der Arbeitsmaschine montierten Arbeitsgeräts. Während die Fußstützen in der Nutzungsposition von der Mittelsäule jeweils seitwärts abgespreizt sein sollten, um die Füße des Fahrers stützen zu können, können sie durch Schwenken nur in eine Warteposition gelangen, in der sie enger als in der Nutzungsposition zur Mittelsäule benachbart sind und in der sie die Sicht somit noch weniger einschränken als in der Nutzungsposition.

Die Fahrerkabine kann in an sich bekannter Weise eine Lenksäule aufweisen, die ein Lenkrad, einen Steuerknüppel oder ein anderes Instrument zum Steuern von Fahrtrichtung und/oder Geschwindigkeit der Arbeitsmaschine trägt. Eine solche Lenksäule blockiert unvermeidlicherweise einen Teil des Sichtfelds des Fahrers. Wenn die oben erwähnte Mittelsäule mit einer solchen Lenksäule identisch ist oder aus Fahrersicht mit der Lenksäule überlappt, kann die Einschränkung der freien Sicht durch die Mittelsäule weiter minimiert werden.

Jede Fußstütze sollte eine Fußaufstellfläche aufweisen, die wenigstens in der Nutzungsposition weiter von der Mittelsäule entfernt ist als die Achse, um welche die Fußstütze schwenkbar ist. Vorzugsweise sind die Fußstützen um eine in Fahrzeuglängsrichtung orientierte Achse schwenkbar. So ist die Schwenkbewegung zwangsläufig auch mit einer Anhebung oder Absenkung der Fußstützen verbunden, und der Übergang zwischen warteposition und Nutzungsposition kann in einer Richtung durch Schwerkraft angetrieben sein.

Vorzugsweise sind die Fußstützen in Warteposition aus der Nutzungsposition angehoben, d.h. der durch Schwerkraft angetriebene Übergang ist der von der Warte- in die Nutzungsposition.

Um die Fußstützen in der höhergelegenen der beiden Positionen, vorzugsweise also in der Warteposition, gegen einen unbeabsichtigten Übergang zu sichern, kann ein Rastmittel vorgesehen sein.

Ein Betätigungselement zum Entrasten des Rastmittels kann an der Mittelsäule angeordnet sein. Vorzugsweise ist es unterhalb der Achse der Fußstütze platziert, sodass es bequem mit einem Fuß erreichbar und betätigbar ist.

Einer bevorzugten Ausgestaltung zufolge bilden das Betätigungselement und das Rastmittel jeweils einen Arm eines zweiarmigen Hebels, wobei der das Betätigungselement bildende Arm wenigstens einen sich von einer Achse des Hebels entlang der Mittelsäule abwärts erstreckenden ersten Schenkel umfasst. Ein solcher Schenkel kann betätigt werden, indem er mit dem Fuß gegen die Mittelsäule gedrückt wird.

Um das Betätigen des Schenkels zu erleichtern, auch wenn der Schenkel für den Fahrer nicht sichtbar und z.B. hinter der Lenksäule verborgen ist, kann das untere Ende des Schenkels tellerförmig verbreitert sein.

Einer Weiterbildung zufolge ist das Betätigungselement gewinkelt und umfasst ferner einen zweiten Schenkel, der sich von einem unteren Ende des ersten Schenkels aus von der Mittelsäule fort erstreckt. Ein solcher Schenkel kann betätigt werden, indem er mit dem Fuß angehoben oder, vorzugsweise, heruntergedrückt wird.

Zwischen dem ersten Schenkel und der Mittelsäule kann eine Druckfeder angebracht sein, um den ersten Schenkel, wenn das Betätigungselement nicht betätigt ist, von der Mittelsäule abgespreizt zu halten.

Der als Rastmittel fungierende Hebelarm kann sich in Höhe der Achse von der Mittelsäule fort erstrecken.

Um die die Fußstützen tragende Struktur einfach zu halten, sind die Achse des zweiarmigen Hebels und die Achse der Fußstütze vorzugsweise in einem gleichen Beschlagteil gelagert.

Ein solches Beschlagteil kann an der Mittelsäule in unterschiedlichen Höhenlagen befestigbar sein, um dem Fahrer eine Anpassung der Höhe der Fußstütze an seine persönlichen Vorlieben zu ermöglichen.

Um eine hohe Tragfähigkeit bei geringem Gewicht zu erreichen, kann die Fußstütze als ein Hohlkörper mit einem in der Nutzungsposition oberen, als Auflagefläche der Füße dienenden Wandabschnitt und einem in der Nutzungsposition unteren Wandabschnitt ausgebildet sein. Wenn dieser Hohlkörper ein offenes achsnahes Ende aufweist, kann dieses zur Verrastung der Fußstütze in der Warteposition genutzt werden, indem das Rastmittel in das offene Ende des Hohlkörpers eingreift.

In der Warteposition, wenn die Fußstützte im Wesentlichen in die Vertikale geklappt ist, erstreckt sich der untere Wandabschnitt vorzugsweise abwärts über den oberen Wandabschnitt hinaus. So kann sichergestellt werden, dass eine Anschlagfläche, die den unteren Wandabschnitt der Nutzungsposition blockiert, nicht bereits vor Erreichen der Nutzungsposition mit dem oberen Wandabschnitt zusammenwirkt.

Eine solche Anschlagfläche kann insbesondere mit einer Kante des unteren Wandabschnitts zusammenwirken.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische, teilweise geschnittene Seitenansicht der vorderen Hälfte eines Mähdreschers als Beispiel für eine erfindungsgemäße Arbeitsmaschine;
- Fig. 2: eine Innenansicht einer Fahrerkabine des Mähdreschers;
- Fig. 3: eine Ansicht eines Beschlagteils mit zwei daran montierten Fußstützen;
- Fig. 4: ein Detail der Verbindung zwischen Beschlagteilen und einer der Fußstützen in Warteposition im Schnitt;
- Fig. 5: einen zur Fig. 4 analogen Schnitt, der die Fußstütze in entrasteter Stellung auf dem Weg von der Warteposition in die Nutzungsposition zeigt;
- Fig. 6: einen Schnitt durch das Beschlagteil und die Fußstütze in der Nutzungsposition; und
- Fig. 7: einen Schnitt durch das Beschlagteil und die Fußstütze auf dem Weg zurück in die Warteposition.

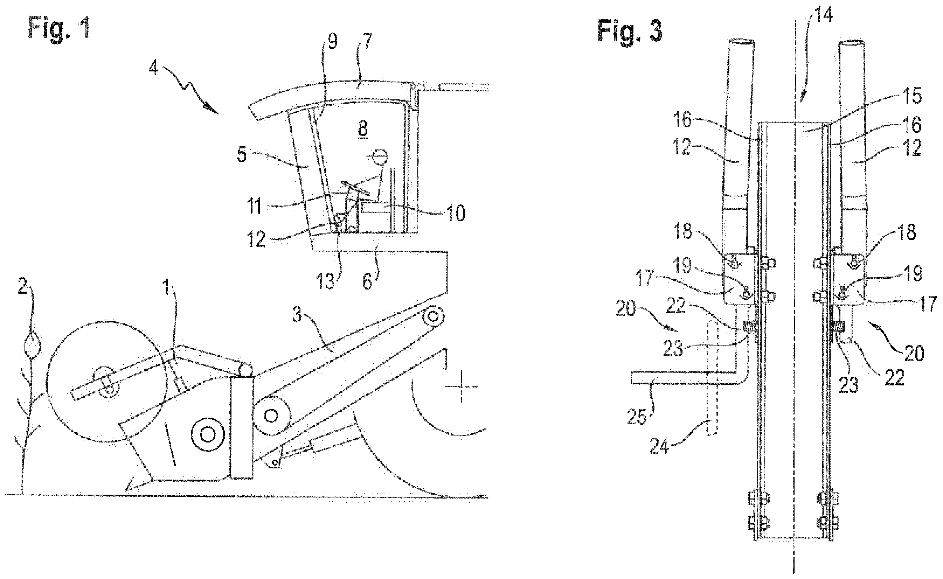

Fig. 1 zeigt die vordere Hälfte eines Mähdreschers. Der Mähdrescher trägt an der Vorderseite seiner Karosserie ein austauschbares Arbeitsgerät wie etwa ein Getreideschneidwerk 1 zum Schneiden und Sammeln von Erntegut 2. Ein Schrägförderer 3 befördert das geschnittene Erntegut zu einem nicht gezeigten, an sich bekannten Dreschwerk im Inneren der Karosserie. Eine Fahrerkabine 4 ist an der Karosserie über den Schrägförderer 3 vorspringend montiert. Große Fensterflächen gewähren dem Fahrer aus der Fahrerkabine 4 einen möglichst uneingeschränkten Blick auf das Getreideschneidwerk 1 oder ein beliebiges anderes am Mähdrescher montiertes Arbeitsgerät. Die Fensterflächen umfassen hier eine Frontscheibe 5, die sich ununterbrochen zwischen den Vorderkanten einer Bodenplatte 6 und eines Dachs 7 der Fahrerkabine 4 erstreckt, sowie eine Tür 8, die, eventuell abgesehen von einem schmalen einfassenden Rahmen, vollständig durch eine Platte aus Sicherheitsglas oder glasklarem Kunststoff gebildet ist. Zwischen der Frontscheibe 5 und der Tür 8 erstreckt sich ein schmaler, das Dach 7 tragender Holm 9. An dem Holm 9 kann ferner eine Falle für ein Schloss der Tür 8 vorgesehen sein.

In der Fahrerkabine 4 ist vor einem Fahrersitz 10 eine Lenksäule 11 mittig platziert, sodass in einer natürlichen Sitzhaltung des Fahrers dessen Unterschenkel rechts und links von der Lenksäule 11 Platz finden und seine Füße beiderseits der Lenksäule 11 auf der Bodenplatte 6 ruhen können.

Um dem Fahrer neben der Haltung mit den Füßen auf der Bodenplatte 6 noch ein weitere bequeme Sitzhaltung anbieten zu können, sind an einer vom Fahrer abgewandten Seite der Lenksäule 11 nach rechts und links ausklappbare Fußstützen 12 montiert. Die Fußstützen 12 können unmittelbar an einer Vorderseite der Lenksäule 11 angebracht sein; in dem hier gezeigten Fall ist als Träger der Fußstützen 12 zusätzlich eine Mittelsäule 13 zwischen der Lenksäule 11 und der Frontscheibe 5 vorgesehen.

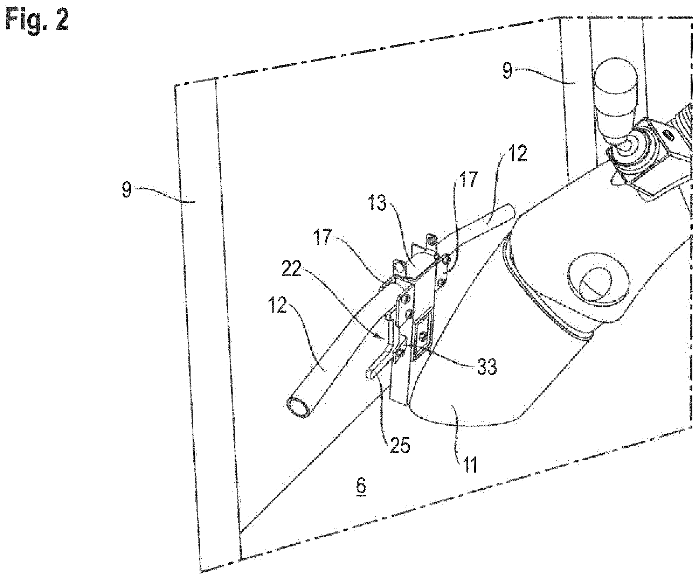

Fig. 2 zeigt einen Ausschnitt der Fahrerkabine, gesehen durch die Tür 8. Man erkennt einen Teil der Lenksäule 11 und die zwischen der Lenksäule 11 und einer Vorderkante der Bodenplatte 6 angeordnete Mittelsäule 13, von der in einer Nutzungsposition die zwei Fußstützen 12 nach rechts und links abstehen.

Die Breite der Mittelsäule 13 ist an die der Lenksäule 11 angepasst, sodass aus der Sicht des Fahrers die Mittelsäule 13 komplett hinter der Lenksäule 11 versorgen ist. Lediglich die Fußstützen 12 stehen beiderseits der Lenksäule 11 über, so dass der Fahrer seine Füße darauf ohne Behinderung durch die Lenksäule 11 platzieren kann.

Die Fig. 3 zeigt in einer Ansicht in Fahrzeuglängsrichtung des Mähdreschers ein Beschlagteil 14 mit zwei schwenkbar daran montierten Fußstützen 12. Das Beschlagteil 14 ist hier ein U-Profil mit dem Betrachter zugewandter konkaver Seite, mit einer ebenen Mittelwand 15 und zwei sich von den Kanten der Mittelwand 15 aus in Richtung zum Betrachter hin erstreckenden Schenkeln 16. Das Beschlagteil 14 kann fester Bestandteil der Mittelsäule 13 sein; alternativ können die Mittelsäule 13 oder die Lenksäule 11 an ihrer vom Fahrersitz 10 abgewandten Seite mit einer vertikal langgestreckten Rippe versehen sein, auf die das Beschlagteil 14 aufsteckbar ist und an der es in unterschiedlichen, wählbaren Höhen verschraubbar ist, um unterschiedliche Höhen der Fußstützen 12 über der Bodenplatte 6 zu realisieren.

An den Schenkeln 16 sind, hier jeweils mit Hilfe von zwei Schrauben, Lagerteile 17 für die Fußstützen 12 befestigt. Die Lagerteile 17 haben wie das Beschlagteil 14 einen U-förmigen Querschnitt mit einer Mittelwand, die an einem der Schenkel 16 anliegt, und von der Mittelwand rechtwinklig abstehenden Flügeln, die in je zwei Bohrungen zwei Bolzen mit Längsachsen 18, 19 aufnehmen. Wie in der Fig. 3 angedeutet, können die Bolzen in den Bohrungen der Lagerteile 17 jeweils durch Splinte gesichert sein.

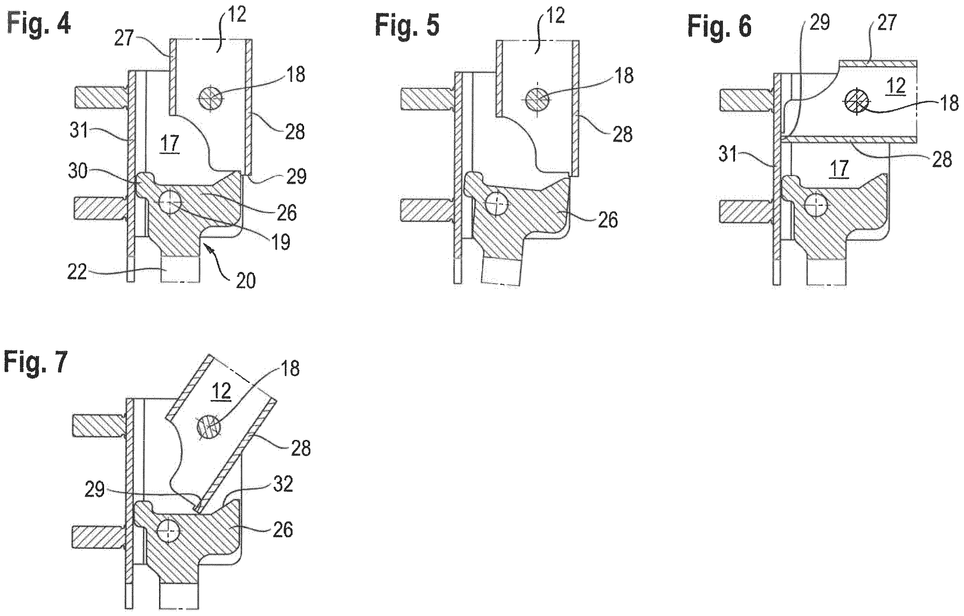

Die Längsachse 18 eines Lagerteils 17 ist jeweils die Schwenkachse einer der in Fig. 3 in Wartestellung gezeigten Fußstützen 12. Die Achse 19 ist die Schwenkachse eines zweiarmigen Hebels 20, dessen Wirkung anhand von Fig. 4 ff. später genauer erläutert wird. Ein Arm des Hebels 20 ist in Fig. 3 im Inneren des Lagerteils 17 verborgen. Ein zweiter Arm des Hebels 20 umfasst einen Schenkel 22, der sich vom Achszapfen 19 aus entlang des Schenkels 16 des Beschlagteils vertikal nach unten erstreckt und von dem Schenkel 16 durch eine Druckfeder 23 abgespreizt gehalten ist.

Am unteren Ende des Schenkels 22 ist einer ersten Ausgestaltung der Erfindung zufolge ein Teller 24 angeordnet, der in der Vertikalen und in der Fahrzeuglängsrichtung ausgedehnt ist, sodass der Fahrer ihn mit einer Seitwärtsbewegung des Fußes bequem treffen und gegen die Mittelsäule 13 drücken kann, auch ohne ihn dabei sehen zu können. Insbesondere kann die Einbauhöhe des Beschlagteils 14 so gewählt sein, dass der Teller 24 durch Seitwärtsschwenken eines mit der Ferse auf der Bodenplatte 6 ruhenden Fußes betätigbar ist.

Einer zweiten Ausgestaltung zufolge und wie auch in Fig. 2 gezeigt ist der Teller 24 durch einen zweiten Schenkel 25 ersetzt, der sich ausgehend von einem unteren Ende des Schenkels 22 seitwärts, von der Mittelsäule 13 fort, erstreckt. Dieser Schenkel 25 ist vorzugsweise lang genug, um aus der Perspektive des Fahrers neben der Lenksäule 11 sichtbar zu sein bzw. durch ein Ausstrecken eines mit der Ferse auf der Bodenplatte 6 ruhenden Fußes betätigbar zu sein.

Die Hebel 20 auf der gegenüberliegenden Seite des Beschlagteils 14 könnten spiegelbildlich zu den oben beschriebenen Hebeln ausgebildet sein, um in analoger Weise wie oben beschrieben vom rechten Fuß des Fahrers betätigt zu werden. Vorzugsweise sind jedoch beide Hebel 20 aneinander gekoppelt, um bei Betätigung des linken Arms 21 jeweils spiegelbildlich zueinander um ihre Achse 19 zu rotieren.

Ein Mechanismus zum Koppeln der beiden Hebel 20 kann z.B., wie in Fig. 2 gezeigt, an das untere Ende von deren Schenkeln 22 angelenkt und großenteils in der Mittelsäule 13 verborgen sein.

Fig. 4 zeigt einen Schnitt senkrecht zu den Achsen 18, 19 durch das rechte Lagerteil 17 der Fig. 2 oder 3, ein achsnahes Ende der rechten Fußstütze 12 und den bereits erwähnten, im Lagerteil 17 verborgenen und hier mit 26 bezeichneten Arm des Hebels 20.

Die Fußstütze 12 ist durch ein Rohr, zum Beispiel mit zylindrischem Querschnitt, gebildet, wobei hier die Achse 18 die Längsachse des Rohrs kreuzt und Wandabschnitte 27, 28 der Fußstütze 12 beiderseits der Achse 18 zu sehen sind. Das in der Fig. 4 gezeigte Ende der Fußstütze 12 ist schräg abgeschnitten, sodass die Wandabschnitte 27, 28 in der gezeigten Stellung unterschiedlich weit nach unten reichen und insbesondere der von der Mittelsäule 13 abgewandte Wandabschnitt 28 über die Achse 18 hinaus und weiter als der gegenüberliegende Wandabschnitt 27 nach unten reicht.

Eine Schwenkbewegung der Fußstütze 12 im Uhrzeigersinn ist dadurch blockiert, dass eine untere Kante 29 des Wandabschnitts 27 sich am freien Ende des Arms 26 abstützt. Der Arm 26 kann dem Druck des Wandabschnitts 27 nicht nachgeben, da ein an der Mittelwand 31 des Lagerteils 17 anliegender Vorsprung 30 des Hebels 20 diesen an einem Schwenken entgegen dem Uhrzeigersinn hindert.

Wenn der Fahrer, zum Beispiel durch Beiseitedrücken des Tellers 24 oder Herunterdrücken des Schenkels 25, den Hebel 20 der Fig. 4 im Uhrzeigersinn schwenkt, dann geht, wie in Fig. 5 gezeigt, die Überlappung zwischen dem freien Ende des Arms 26 und dem Wandabschnitt 28 verloren, und die Fußstütze 12 ist frei, um ihrem Eigengewicht folgend im Uhrzeigersinn in Richtung der Nutzungsposition zu schwenken.

Die Schwenkbewegung endet, wenn in der in Fig. 6 gezeigten Nutzungsposition die untere Kante 29 des Wandabschnitts 28 gegen einen Anschlag, hier etwa die Mittelwand 31 des Lagerteils 17, anstößt. In dieser Stellung kann der Fahrer seinen Fuß auf dem nun oben liegenden Wandabschnitt 27 platzieren, und die Fußstütze 12 trägt das Gewicht des Fußes. Die Länge der Fußstützen 12 ist so bemessen, dass sie in der Nutzungsposition gerade weit genug beiderseits der Lenksäule 11 vorspringen, um eine bequeme Platzierung der Füße darauf zu ermöglichen, gleichzeitig aber eine Einschränkung der freien Sicht seitlich von den darauf ruhenden Füßen zu vermeiden.

Drückt der Fahrer in der Nutzungsposition jedoch mit dem Fuß von unten gegen den Wandabschnitt 28, so schwenkt die Fußstütze 12 aufwärts in Richtung der Warteposition. Wie in Fig. 7 gezeigt, streicht dabei die untere Kante 29 des Wandabschnitts 28 zunächst ohne Berührung an einer Oberseite des Arms 26 entlang. Wenn die Schwenkbewegung fortgesetzt wird, stößt die untere Kante 29 schließlich gegen eine Rampe 32 des Arms 26 und drückt so den Arm 26 entgegen der Spannung der Druckfeder 23 abwärts.

Wenn die Kante 29 das Ende der Rampe 32 passiert hat, schwenkt die Druckfeder 23 den Hebel 20 zurück in die Stellung der Fig. 4, und die Fußstütze 12 ist von neuem in der Warteposition verrastet.

### Bezugszeichenliste

1 Getreideschneidwerk
2 Erntegut
3 Schrägförderer
4 Fahrerkabine
5 Frontscheibe
6 Bodenplatte
7 Dach
8 Tür
9 Säule
10 Fahrersitz
11 Lenksäule
12 Fußstütze
13 Mittelsäule
14 Beschlagteil
15 Mittelwand
16 Schenkel
17 Lagerteil
18 Achse
19 Achse
20 Hebel
21 Arm
22 Schenkel
23 Druckfeder
24 Teller
25 Schenkel
26 Arm
27 Wandabschnitt
28 Wandabschnitt
29 untere Kante
30 Vorsprung
31 Mittelwand
32 Rampe
33 (Kopplungs-)Mechanismus

## Patentansprüche

1. Fahrerkabine für eine landwirtschaftliche Arbeitsmaschine, wobei an linker und rechter Seite einer Mittelsäule (13) jeweils eine Fußstütze (12) montiert ist, **dadurch gekennzeichnet, dass** diese Fußstützen jeweils zwischen einer Warteposition und einer Nutzungsposition um eine Achse (18) schwenkbar sind.

2. Fahrerkabine nach Anspruch 1, **dadurch gekennzeichnet, dass** die Mittelsäule (13) mit einer Lenksäule (11) identisch ist oder aus Fahrersicht mit der Lenksäule (13) überlappt.

3. Fahrerkabine nach Anspruch 1 oder 2, **dadurch gekennzeichnet, dass** jede Fußstütze (12) eine Fußaufstellfläche aufweist, die wenigstens in der Nutzungsposition weiter von der Mittelsäule (13) entfernt ist als ihre Achse (18).

4. Fahrerkabine nach einem der vorhergehenden Ansprüche, **dadurch gekennzeichnet, dass** die Achse (18), um die die Fußstützen (12) schwenkbar sind, in Fahrzeuglängsrichtung orientiert ist.

5. Fahrerkabine nach einem der vorhergehenden Ansprüche, **dadurch gekennzeichnet, dass** die Fußstützen (12) in der Warteposition aus der Nutzungsposition angehoben sind.

6. Fahrerkabine nach einem der vorhergehenden Ansprüche, **gekennzeichnet durch** ein Rastmittel zum Verrasten einer der Fußstützen (12) in der Warteposition.

7. Fahrerkabine nach Anspruch 6, **dadurch gekennzeichnet, dass** ein Betätigungselement zum Entrasten des Rastmittels an der Mittelsäule (13) unterhalb der Achsen (18) angeordnet ist.

8. Fahrerkabine nach Anspruch 7, **dadurch gekennzeichnet, dass** das Betätigungselement und das Rastmittel jeweils einen Arm (21, 26) eines zweiarmigen Hebels (20) bilden, wobei das Betätigungselement einen sich von einer Achse (19) entlang der Mittelsäule (13) abwärts erstreckenden ersten Schenkel (22) umfasst.

9. Fahrerkabine nach Anspruch 8, **dadurch gekennzeichnet, dass** das Betätigungselement gewinkelt ist und einen von einem unteren Ende des ersten Schenkels (22) aus von der Mittelsäule (13) fort erstreckenden zweiten Schenkel (25) umfasst.

10. Fahrerkabine nach Anspruch 8 oder 9, **dadurch gekennzeichnet, dass** eine Druckfeder (23) zwischen dem ersten Schenkel (22) und der Mittelsäule (13) angebracht ist.

11. Fahrerkabine nach Anspruch 8, 9 oder 10, **dadurch gekennzeichnet, dass** das Rastmittel sich in Höhe der Achse (19) von der Mittelsäule (13) fort erstreckt.

12. Fahrerkabine nach einem der Ansprüche 8 bis 11, **dadurch gekennzeichnet, dass** die Achse (19) des zweiarmigen Hebels (20) und die Achse (18) der Fußstütze (12) an einem gleichen Beschlagteil (14) gelagert sind.

13. Fahrerkabine nach einem der Ansprüche 6 bis 12, **dadurch gekennzeichnet, dass** die Fußstütze (12) ein Hohlkörper mit einem in der Nutzungsposition oberen Wandabschnitt (27) und einem in der Nutzungsposition unteren Wandabschnitt (28) ist und dass das Rastmittel in der Warteposition in ein offenes achsnahes Ende des Hohlkörpers eingreift.

14. Fahrerkabine nach Anspruch 13, **dadurch gekennzeichnet, dass** in der Warteposition der untere Wandabschnitt (28) sich weiter als der obere Wandabschnitt (27) abwärts erstreckt.

15. Fahrerkabine nach Anspruch 13 oder 14, **dadurch gekennzeichnet, dass** in der Nutzungsposition eine Kante (29) des unteren Wandabschnitts (28) mit einem Anschlag zusammenwirkt.

## Claims

1. A driver's cab for an agricultural working machine, wherein a respective foot rest (12) is mounted on the left and the right side of a central column (13), **characterized in that** these foot rests can respectively be pivoted about an axis (18) between a standby position and a usage position.

2. The driver's cab according to claim 1, **characterized in that** the central column (13) is identical with a steering column (11) or is overlapped with the steering column (13) from the driver's viewpoint.

3. The driver's cab according to claim 1 or claim 2, **characterized in that** each foot rest (12) has a foot placement surface which, at least in the usage position, is further from the central column (13) than its axis (18).

4. The driver's cab according to one of the preceding claims, **characterized in that** the axis (18) about which the foot rests (12) can pivot is orientated in the longitudinal direction of the vehicle.

5. The driver's cab according to one of the preceding claims, **characterized in that** in the standby position the foot rests (12) are raised from the usage position.

6. The driver's cab according to one of the preceding claims, **characterized by** a lock means for locking one of the foot rests (12) in the standby position.

7. The driver's cab according to claim 6, **characterized in that** an operating element for unlocking the lock means is disposed on the central column (13) below the axes (18).

8. The driver's cab according to claim 7, **characterized in that** the operating element and the lock means respectively form one arm (21, 26) of a dual-armed lever (20), wherein the operating element comprises a first limb (22) which extends downwards along the central column (13) from an axis (19).

9. The driver's cab according to claim 8, **characterized in that** the operating element is angled and comprises a second limb (25) extending outwards from a lower end of the first limb (22) away from the central column (13).

10. The driver's cab according to claim 8 or claim 9, **characterized in that** a compression spring (23) is mounted between the first limb (22) and the central column (13).

11. The driver's cab according to claim 8, 9 or 10, **characterized in that** the lock means extends away from the central column (13) at the height of the axis (19).

12. The driver's cab according to one of claims 8 to 11, **characterized in that** the axis (19) of the dual-armed lever (20) and the axis (18) of the foot rest (12) are mounted on one and the same fitting component (14).

13. The driver's cab according to one of claims 6 to 12, **characterized in that** the foot rest (12) is a hollow body with an upper wall section (27) when in the usage position and a lower wall section (28) when in the usage position, and **in that** in the standby position, the lock means engages into an open end of the hollow body which is near to the axis.

14. The driver's cab according to claim 13, **characterized in that** in the standby position, the lower wall section (28) extends further downwards than the upper wall section (27).

15. The driver's cab according to claim 13 or claim 14, **characterized in that** in the usage position, an edge (29) of the lower wall section (28) cooperates with an end stop.

## Revendications

1. Cabine de conduite pour une machine de travail agricole, sur les côtés gauche et droit d'une colonne centrale (13) étant monté respectivement un repose-pied (12), **caractérisée en ce que** ces repose-pied sont pivotants autour d'un axe (18) entre une position d'attente et une position d'utilisation.

2. Cabine de conduite selon la revendication 1, **caractérisée en ce que** la colonne centrale (13) est identique à une colonne de direction (11) ou, du point de vue du conducteur, se chevauche avec la colonne de direction (13).

3. Cabine de conduite selon la revendication 1 ou 2, **caractérisée en ce que** chaque repose-pied (12) comporte une surface de pose de pied qui, au moins dans la position d'utilisation, est plus éloignée de la colonne centrale (13) que son axe (18).

4. Cabine de conduite selon une des revendications précédentes, **caractérisée en ce que** l'axe (18) autour duquel les repose-pied (12) sont pivotants est orienté dans la direction longitudinale du véhicule.

5. Cabine de conduite selon une des revendications précédentes, **caractérisée en ce que**, dans la position d'attente, les repose-pied (12) sont relevés hors de la position d'utilisation.

6. Cabine de conduite selon une des revendications précédentes, **caractérisée par** un moyen d'encliquetage pour bloquer par encliquetage un des repose-pied (12) dans la position d'attente.

7. Cabine de conduite selon la revendication 6, **caractérisée en ce qu'**un élément d'actionnement est disposé sur la colonne centrale (13) sous les axes (18) pour débloquer le moyen d'encliquetage.

8. Cabine de conduite selon la revendication 7, **caractérisée en ce que** l'élément d'actionnement et le moyen d'encliquetage forment respectivement un bras (21, 26) d'un levier à deux bras (20), l'élément d'actionnement incluant une première branche (22) s'étendant vers le bas à partir d'un axe (19) le long de la colonne centrale (13).

9. Cabine de conduite selon la revendication 8, **caractérisée en ce que** l'élément d'actionnement est coudé et inclut une seconde branche (25) s'étendant à partir d'une extrémité inférieure de la première branche (22) en s'éloignant de la colonne centrale (13).

10. Cabine de conduite selon la revendication 8 ou 9, **caractérisée en ce qu'**un ressort de compression (23) est disposé entre la première branche (22) et la colonne centrale (13).

11. Cabine de conduite selon la revendication 8, 9 ou 10, **caractérisée en ce que** le moyen d'encliquetage s'éloigne de la colonne centrale (13) à la hauteur de l'axe (19).

12. Cabine de conduite selon une des revendications 8 à 11, **caractérisée en ce que** l'axe (19) du levier à deux bras (20) et l'axe (18) du repose-pied (12) sont montés sur une même ferrure (14).

13. Cabine de conduite selon une des revendications 6 à 12, **caractérisée en ce que** le repose-pied (12) est un corps creux avec une portion de paroi (27) supérieure dans la position d'utilisation et une portion de paroi (28) inférieure dans la position d'utilisation, et **en ce que**, dans la position d'attente, le moyen d'encliquetage pénètre dans une extrémité ouverte, proche de l'axe, du corps creux.

14. Cabine de conduite selon la revendication 13, **caractérisée en ce que**, dans la position d'attente, la portion de paroi inférieure (28) s'étend plus loin vers le bas que la portion de paroi supérieure (27).

15. Cabine de conduite selon la revendication 13 ou 14, **caractérisée en ce que**, dans la position d'utilisation, un bord (29) de la portion de paroi inférieure (28) coopère avec une butée.
